# EUROPÄISCHE PATENTANMELDUNG

(11) **EP 1 168 031 A2**
(43) Veröffentlichungstag der Anmeldung: **02.01.2002**
(21) Anmeldenummer: 01114187.6
(22) Anmeldetag: 12.06.2001
(51) Int. Cl.: G02B 21/24

(54) **Mikroskop-Aufbau**

(30) Priorität: 23.06.2000 DE 10029680
(71) Anmelder: Leica Microsystems Heidelberg GmbH, 68165 Mannheim (DE)
(72) Erfinder: Engelhardt, Johann, Dr., 76669 Bad Schönborn (DE)
(74) Vertreter: Reichert, Werner F., Dr.

(57) **Zusammenfassung**

Ein Mikroskop-Aufbau, insbesondere konfokales Laser-Scanning-Mikroskop, mit einer einen Lichtstrahl (2) erzeugenden Lichtquelle (1), insbesondere Laserlichtquelle, zur Beleuchtung eines zu untersuchenden Objekts (6), einem Mittel (3) zur Auffächerung des Lichtstrahls (2) in einen im Wesentlichen linienförmigen Beleuchtungslichtstrahl, einem Objektiv (5) zur Führung des Beleuchtungslichtstrahls zu dem Objekt (6) und einer Einrichtung zur Erzeugung einer Relativbewegung zwischen dem Beleuchtungslichtstrahl und dem Objekt (6) ist im Hinblick auf eine sichere Echtzeitbeobachtung des Objekts (6) mit konstruktiv einfachen Mitteln derart ausgestaltet, dass die Einrichtung derart ausgebildet ist, dass der Beleuchtungslichtstrahl mittels der Einrichtung in der Objektivpupille drehbar oder dass das Objekt (6) mittels der Einrichtung mindestens eindimensional bewegbar ist.

## Beschreibung

Die Erfindung betrifft einen Mikroskop-Aufbau, insbesondere konfokales Laser-Scanning-Mikroskop, mit einer einen Lichtstrahl erzeugenden Lichtquelle, insbesondere Laserlichtquelle, zur Beleuchtung eines zu untersuchenden Objekts, einem Mittel zur Auffächerung des Lichtstrahls in einen im Wesentlichen linienförmigen Beleuchtungslichtstrahl, einem Objektiv zur Führung des Beleuchtungslichtstrahls zu dem Objekt und einer Einrichtung zur Erzeugung einer Relativbewegung zwischen dem Beleuchtungslichtstrahl und dem Objekt.

Mikroskop-Aufbauten der eingangs genannten Art sind aus der Praxis bekannt und existieren in den unterschiedlichsten Ausführungsformen. Die bekannten Mikroskop-Aufbauten sind häufig als konfokale Laser-Scanning-Mikroskope ausgebildet. In der konfokalen Scanning-Mikroskopie wird ein Objekt mit einem Lichtstrahl abgerastert. Ein konfokales Rastermikroskop umfasst im Allgemeinen eine Lichtquelle, eine Fokussieroptik, mit der das Licht der Quelle auf eine Lochblende fokussiert wird, einen Strahlteiler, eine Scanvorrichtung zur Strahlsteuerung, die als Einrichtung zur Erzeugung einer Relativbewegung zwischen dem Beleuchtungslichtstrahl und dem Objekt dient, eine Mikroskopoptik, eine Detektionsblende und Detektoren zum Nachweis des Detektions- bzw. Fluoreszenzlichts. Das Beleuchtungslicht wird meist über den Strahlteiler eingekoppelt. Der Fokus des Lichtstrahls wird im Allgemeinen durch Verkippen zweier Spiegel in einer Objektebene bewegt, wobei die Ablenkachsen meist senkrecht aufeinander stehen, so dass ein Spiegel in X-, der andere in Y-Richtung ablenkt. Die Verkippung der Spiegel wird beispielsweise mit Hilfe von Galvanometer-Stellelementen bewerkstelligt. Das von der Probe kommende Fluoreszenz- oder Reflexionslicht gelangt in der meist üblichen Descan-Anordnung über dieselben Scanspiegel zurück zum Strahlteiler und passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punkt-information erhält, die durch Abrastern des Objekts zu einem dreidimensionalen Bild führt.

Im Fall der Zweiphotonenanregung kann auf eine Detektionsblende verzichtet werden, da die Anregungswahrscheinlichkeit vom Quadrat der Photonendichte abhängt - Proportionalität zum Quadrat der Intensität -, die naturgemäß im Fokus viel höher ist als in den Nachbarregionen. Das zu detektierende Fluoreszenzlicht stammt daher mit großer Wahrscheinlichkeit zum größten Teil aus der Fokusregion, was eine weitere Differenzierung von Fluoreszenzphotonen aus dem Fokusbereich von Fluoreszenzphotonen aus den Nachbarbereichen mit einer Blendenanordnung überflüssig macht. Aber auch bei Einphotonenanregung kann die Detektion des Transmissionslichts bzw. die kondensorseitige Detektion des Fluoreszenzlichts hilfreich sein.

Für eine Echtzeitbeobachtung des Objekts sind konventionelle Rastermikroskope zu langsam. Das Abscannen eines Bilds dauert je nach Auflösung bis zu einer Sekunde und länger. Zur Beschleunigung des Rastervorgangs ist es möglich, mehrere Objektpunkte simultan zu beleuchten. Für die Zweiphotonenanregung sind aus der DE 196 53 413 und der EP 0 753 779 Anordnungen bekannt, die rotierende Mikrolinsenscheiben verwenden, wobei üblicherweise 20 bis 50 Probenpunkte simultan mit Femtosekundenpulsen beleuchtet werden.

Aus dem Journal of Microscopy, Vol. 181, Pt 3, März 1996, Seiten 253 - 259, ist ein Mikroskop-Aufbau bekannt, bei dem ein durch einen Laser erzeugter Lichtstrahl durch ein Mittel zur Auffächerung des Lichtstrahls in einen im Wesentlichen linienförmigen Beleuchtungslichtstrahl aufgeweitet wird. Hierdurch kann eine ganze Zeile im Objekt mit einem Linienfokus simultan beleuchtet werden. Der Scanvorgang kann damit auf eine Dimension reduziert werden. Dabei dient ein zweiseitiger Spiegel als Einrichtung zur Erzeugung einer Relativbewegung zwischen dem Beleuchtungslichtstrahl und dem Objekt. Mit anderen Worten wird der Lichtstrahl über das Objekt gescannt, um eine Echtzeitbeobachtung des Objekts zu ermöglichen.

Zur Durchführung einer derartigen Echtzeitbeobachtung ist es bei den bekannten Mikroskop-Aufbauten meistens erforderlich, eine zusätzliche Zwischenoptik in den Mikroskop-Aufbau zu integrieren. Eine derartige Zwischenoptik führt jedoch unvermeidlich zu einer Reduzierung der Lichtleistung. Aufgrund dieser Reduzierung der Lichtleistung ist eine sichere Echtzeitbeobachtung des Objekts oftmals nicht mehr möglich.

Der vorliegenden Erfindung liegt daher die Aufgabe zugrunde, einen Mikroskop-Aufbau der eingangs genannten Art anzugeben, bei dem eine sichere Echtzeitbeobachtung des Objekts mit konstruktiv einfachen Mitteln ermöglicht ist.

Erfindungsgemäß ist die voranstehende Aufgabe durch einen Mikroskop-Aufbau mit dem Merkmalen des Patentanspruchs 1 gelöst. Danach ist der Mikroskop-Aufbau der eingangs genannten Art derart ausgestaltet, dass die Einrichtung derart ausgebildet ist, dass der Beleuchtungslichtstrahl mittels der Einrichtung in der Objektivpupille drehbar oder dass das Objekt mittels der Einrichtung mindestens eindimensional bewegbar ist.

In erfindungsgemäßer Weise ist zunächst erkannt worden, dass eine sichere Echtzeitbeobachtung auch ohne lichtleistungsreduzierende Zwischenoptiken möglich ist. Hierzu ist in weiter erfindungsgemäßer Weise die Einrichtung zur Erzeugung einer Relativbewegung zwischen dem Beleuchtungslichtstrahl und dem Objekt derart ausgebildet, dass der Beleuchtungslichtstrahl mittels der Einrichtung in der Objektivpupille drehbar ist. Durch eine derartige Anordnung ist keine weitere Zwischenoptik im Mikroskop-Aufbau mehr erforderlich. Folglich liegt im gesamten Strahlengang keine zusätzliche Reduzierung der Lichtleistung vor. Damit ist eine sichere Echtzeitbeobachtung des Objekts ohne Lichtleistungsverluste auf einfache Weise ermöglicht.

Alternativ hierzu könnte die Einrichtung zur Erzeugung einer Relativbewegung zwischen dem Beleuchtungslichtstrahl und dem Objekt derart ausgebildet sein, dass das Objekt mittels der Einrichtung mindestens eindimensional bewegbar ist. Hierdurch liegt eine Art Objekt-Scanning vor, wodurch in sehr einfacher Weise der Mikroskop-Aufbau entlang dem gesamten Strahlengang bis zum Objekt unverändert bleiben kann. Die Führung des linienförmigen Beleuchtungslichtstrahls über das Objekt erfolgt also nicht durch Bewegung des Beleuchtungslichtstrahls, sondern durch Bewegung des Objekts. Hierdurch ist eine besonders einfache Ausgestaltung eines Mikroskop-Aufbaus realisiert, bei dem eine sichere Echtzeitbeobachtung des Objekts mit konstruktiv einfachen Mitteln ermöglicht ist.

Im Falle der Ausgestaltung der Einrichtung zur Erzeugung einer Relativbewegung zwischen dem Beleuchtungslichtstrahl und dem Objekt dahingehend, dass der Beleuchtungslichtstrahl mittels der Einrichtung in der Objektivpupille drehbar ist, könnte die Einrichtung ein Kippelement zum Verkippen der Lichtquelle aufweisen. Damit ist eine Verkippung des Lichtstrahls zu Beginn des Strahlengangs ermöglicht. Hierbei ist ein Kippelement bzw. eine Vorrichtung zum Schwenken eines Lichtstrahls verwendbar, wie sie aus der deutschen Patentanmeldung 100 04 661.4 der Anmelderin bekannt ist.

In konstruktiv besonders einfacher Weise könnte die Einrichtung durch einen Strahlteiler gebildet sein. Dabei könnte derjenige Strahlteiler verwendet werden, über den der Beleuchtungslichtstrahl in den Strahlengang eingekoppelt wird.

Zum Verkippen eines Strahlteilers könnte die Einrichtung ein besonderes Kipp-element aufweisen. Dabei könnte der Strahlteiler auf dem Kippelement angeordnet sein. Als Kippelement könnte wiederum das oben erwähnte Kippelement, das auf eine Entwicklung der Anmelderin zurückgeht, verwendet werden. Auch hierdurch ist ein Drehen des Lichtstrahls in der Objektivpupille ermöglicht.

Eine weitere Möglichkeit der Ausgestaltung des Mikroskop-Aufbaus könnte dadurch realisiert sein, dass die Einrichtung nach einem Strahlteiler angeordnet ist. Auch hierbei ist wesentlich, dass ein Drehen des Lichtstrahls in der Objektivpupille ermöglicht ist.

Als Strahlteiler könnten unterschiedliche Bauelemente eingesetzt werden. In besonders vorteilhafter Weise könnte der Strahlteiler ein dichroitischer Filter oder dichroitischer Strahlteiler sein. Hierdurch könnte bei einer gewünschten Betrachtung des Bilds mit bloßem Auge ein Schutz des Auges vor dem Anregungslicht realisiert sein.

Bei einer konkreten Ausgestaltung könnte der Lichtstrahl bzw. das Anregungslicht gepulst sein. Hinsichtlich der Art der Pulsung ist auf den jeweiligen Anwendungsfall abzustellen.

Als Mittel zur Auffächerung des Lichtstrahls könnten verschiedene Bauelemente zum Einsatz kommen. In der Praxis hat sich gezeigt, dass ein Mittel zur Auffächerung des Lichtstrahls mit einer Zylinderoptik besonders einfach und zuverlässig ist.

Zur Detektion könnte ein Detektor in Form mindestens eines CCD-Chips vorgesehen sein. Alternativ hierzu könnte ein Detektor in Form mindestens eines Fotodiodenarrays vorgesehen sein. Diesbezüglich sind unterschiedlichste Chips und Arrays auf dem Markt erhältlich.

Bei Anordnung der Einrichtung bzw. einer Kippanordnung nach dem Strahlteiler bzw. Hauptstrahlteiler ist nur ein Zeilendetektor, beispielsweise eine Fotodiodenzeile, erforderlich.

Mit dem erfindungsgemäßen Mikroskop-Aufbau ist es insbesondere möglich, das Bild mit bloßem Auge direkt betrachten zu können, wobei das Auge vor dem Anregungslicht, insbesondere Anregungslaserlicht, mit beispielsweise einem geeigneten Filter geschützt werden sollte. Hierzu könnte der Hauptstrahlteiler oder Strahlteiler ein dichroitischer Filter sein.

Bei einer Zweiphotonenanregung kann auf die Detektionsschlitzblende verzichtet werden. Der Aufbau reduziert sich dann in vorteilhafter Weise auf wenige mechanische und optische Elemente.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung, schematisch, ein Ausführungsbeispiel eines erfindungsgemäßen Mikroskop-Aufbaus,
- Fig. 2: in einer Seitenansicht, schematisch und teilweise, das Ausführungsbeispiel aus Fig. 1,
- Fig. 3: in einer Seitenansicht, schematisch, ein zweites Ausführungsbeispiel eines erfindungsgemäßen Mikroskop-Aufbaus,
- Fig. 4: in einer Seitenansicht, schematisch, ein drittes Ausführungsbeispiel eines erfindungsgemäßen Mikroskop-Aufbaus und
- Fig. 5: in einer Seitenansicht, schematisch, ein viertes Ausführungsbeispiel eines erfindungsgemäßen Mikroskop-Aufbaus.

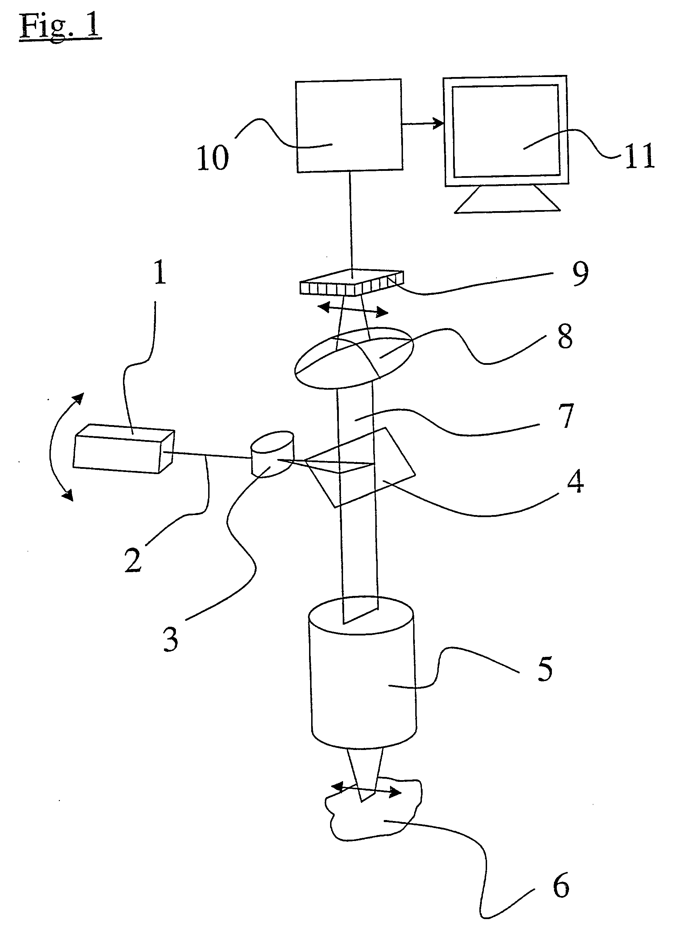

Fig. 1 zeigt in einer perspektivischen und schematisch Übersichtsdarstellung ein Ausführungsbeispiel eines erfindungsgemäßen Mikroskop-Aufbaus. Dabei ist eine Anordnung für eine Zweiphotonenanregung dargestellt. Der von einer Lichtquelle 1 erzeugte gepulste Lichtstrahl 2 wird mit einem Mittel 3 zur Auffächerung des Lichtstrahls 2 in Form einer Zylinderlinsenoptik in einer Richtung räumlich aufgeweitet und über einen dichroitischen Strahlteiler 4 auf ein Objektiv 5 gelenkt. Dabei kann ein Objekt 6 mittels einer Einrichtung zur Erzeugung einer Relativbewegung zwischen dem Lichtstrahl 2 und dem Objekt 6 zeilenweise abgerastert werden. Ein Detektionslicht 7 wird mittels einer Fokussieroptik 8 fokussiert und von einem CCD-Chip 9 erfasst. Eine Signalverarbeitung erfolgt mittels einer Elektronik oder Rechnereinheit 10, die die Bilddaten zur Darstellung an einen Computer 11 weiterleitet.

Bei dem gezeigten Ausführungsbeispiel ist die Lichtquelle 1 eine Laserlichtquelle. Bei dem Mikroskop-Aufbau ist wesentlich, dass eine Einrichtung zur Erzeugung einer Relativbewegung zwischen dem Beleuchtungslichtstrahl und dem Objekt 6 vorgesehen ist. Im Hinblick auf die Möglichkeit einer sicheren Echtzeitbeobachtung des Objekts 6 ist die Einrichtung derart ausgebildet, dass entweder der Beleuchtungslichtstrahl mittels der Einrichtung in der Objektivpupille drehbar oder das Objekt 6 mittels der Einrichtung mindestens eindimensional bewegbar ist. Bei dem in Fig. 1 gezeigten Ausführungsbeispiel ist der Lichtstrahl 2 mittels der Einrichtung verkippbar. Hierzu ist das Beleuchtungssystem bzw. die Lichtquelle 1 auf einem Kippelement der Einrichtung montiert.

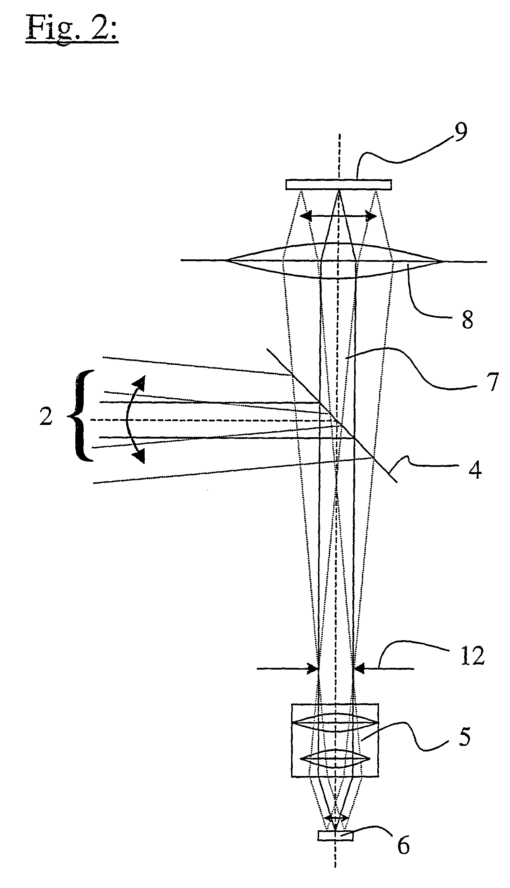

Fig. 2 zeigt in einer schematischen und teilweisen Seitenansicht das Ausführungsbeispiel aus Fig. 1. Dabei ist das Verkippen des Lichtstrahls 2 besonders gut erkennbar, wobei das Verkippen derart ausführbar ist, dass sich der Beleuchtungslichtstrahl in der Objektivpupille 12 dreht. Bei dem gezeigten Ausführungsbeispiel findet eine Zweiphotonenanregung statt.

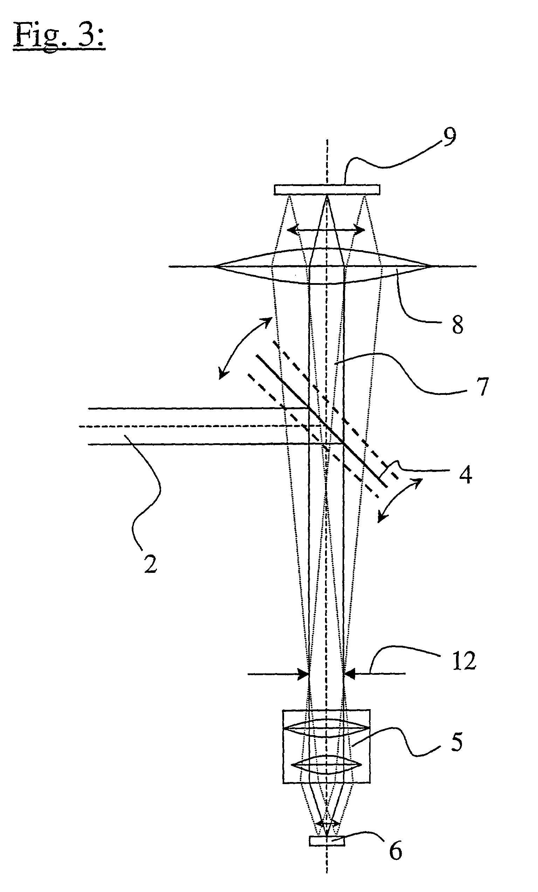

Fig. 3 zeigt in einer schematischen Seitenansicht ein zweites Ausführungsbeispiel eines erfindungsgemäßen Mikroskop-Aufbaus, wobei hier für im Vergleich zum ersten Ausführungsbeispiel gleiche Bauelemente gleiche Bezugsziffern verwendet sind. Bei dem zweiten Ausführungsbeispiel ist der Strahlteiler 4 bzw. Hauptstrahlteiler so kippbar angeordnet, dass er als Scanvorrichtung bzw. als Einrichtung zur Erzeugung einer Relativbewegung zwischen dem Beleuchtungslichtstrahl und dem Objekt 6 dient. Auch hier wird der Beleuchtungslichtstrahl in der Objektivpupille 12 gedreht.

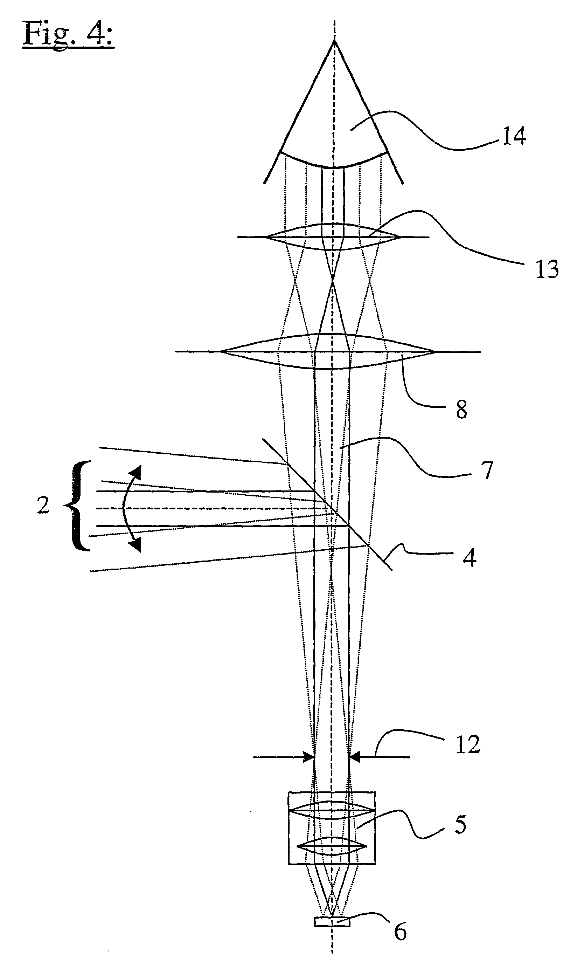

Fig. 4 zeigt in einer schematischen Seitenansicht ein drittes Ausführungsbeispiel eines erfindungsgemäßen Mikroskop-Aufbaus, wobei der Aufbau zur Direktbeobachtung durch den Bediener ausgebildet ist. Hierzu weist der Aufbau ein Okular 13 für einen Beobachter 14 auf. Ansonsten entspricht der Aufbau des dritten Ausführungsbeispiels dem Aufbau des ersten Ausführungsbeispiels.

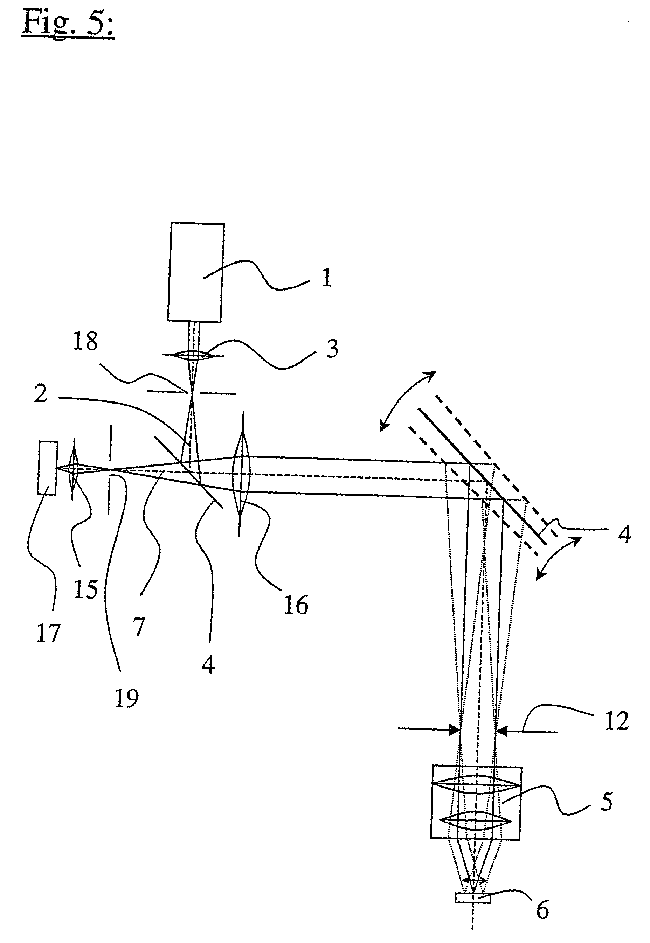

Fig. 5 zeigt in einer schematischen Seitenansicht ein viertes Ausführungsbeispiel eines erfindungsgemäßen Mikroskop-Aufbaus. Es handelt sich hierbei um eine Anordnung mit Einphotonenanregung oder zur Reflexionsbeobachtung. Hierzu sind zusätzliche Optiken 15 und 16 eingefügt.

Als Detektor ist ein Zeilendetektor 17 vorgesehen. Des Weiteren wird eine Anregungslichtschlitzblende 18 bzw. Beleuchtungsschlitzblende sowie eine Detektionsschlitzblende 19 verwendet.

Die Einrichtung zur Erzeugung einer Relativbewegung zwischen dem Beleuchtungslichtstrahl und dem Objekt 6 ist in Form eines Strahlteilers 4 nach dem eigentlichen Hauptstrahlteiler 4 angeordnet. Damit ist es ausreichend, lediglich einen Zeilendetektor 17 und keinen Flächendetektor zu verwenden.

Hinsichtlich weiterer vorteilhafter Ausgestaltungen und Weiterbildungen des erfindungsgemäßen Mikroskop-Aufbaus wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf diese Ausführungsbeispiele einschränken.

### Bezugszeichenliste

- 1: Lichtquelle
- 2: Lichtstrahl
- 3: Mittel zur Auffächerung des Lichtstrahls
- 4: Strahlteiler
- 5: Objektiv
- 6: Objekt
- 7: Detektionslicht
- 8: Fokussieroptik
- 9: CCD-Chip
- 10: Rechnereinheit
- 11: Computer
- 12: Objektivpupille
- 13: Okular
- 14: Beobachter
- 15: Optik
- 16: Optik
- 17: Zeilendetektor
- 18: Anregungslichtschlitzblende
- 19: Detektionsschlitzblende

## Patentansprüche

1. Mikroskop-Aufbau, insbesondere konfokales Laser-Scanning-Mikroskop, mit einer einen Lichtstrahl (2) erzeugenden Lichtquelle (1), insbesondere Laserlichtquelle, zur Beleuchtung eines zu untersuchenden Objekts (6), einem Mittel (3) zur Auffächerung des Lichtstrahls (2) in einen im Wesentlichen linienförmigen Beleuchtungslichtstrahl, einem Objektiv (5) zur Führung des Beleuchtungslichtstrahls zu dem Objekt (6) und einer Einrichtung zur Erzeugung einer Relativbewegung zwischen dem Beleuchtungslichtstrahl und dem Objekt (6),
**dadurch gekennzeichnet, dass** die Einrichtung derart ausgebildet ist, dass der Beleuchtungslichtstrahl mittels der Einrichtung in der Objektivpupille (12) drehbar oder dass das Objekt (6) mittels der Einrichtung mindestens eindimensional bewegbar ist.

2. Mikroskop-Aufbau nach Anspruch 1, **dadurch gekennzeichnet, dass** die Einrichtung ein Kippelement zum Verkippen der Lichtquelle (1) aufweist.

3. Mikroskop-Aufbau nach Anspruch 1, **dadurch gekennzeichnet, dass** die Einrichtung durch einen Strahlteiler (4) gebildet ist.

4. Mikroskop-Aufbau nach Anspruch 1, **dadurch gekennzeichnet, dass** die Einrichtung ein Kippelement zum Verkippen eines Strahlteilers (4) aufweist.

5. Mikroskop-Aufbau nach Anspruch 4, **dadurch gekennzeichnet, dass** der Strahlteiler (4) auf dem Kippelement angeordnet ist.

6. Mikroskop-Aufbau nach Anspruch 1, 3, 4 oder 5, **dadurch gekennzeichnet, dass** die Einrichtung nach einem Strahlteiler (4) angeordnet ist.

7. Mikroskop-Aufbau nach einem der Ansprüche 3 bis 6, **dadurch gekennzeichnet, dass** der Strahlteiler (4) ein dichroitischer Filter oder dichroitischer Strahlteiler ist.

8. Mikroskop-Aufbau nach einem der Ansprüche 1 bis 7, **dadurch gekennzeichnet, dass** der Lichtstrahl (2) gepulst ist.

9. Mikroskop-Aufbau nach einem der Ansprüche 1 bis 8, **dadurch gekennzeichnet, dass** das Mittel (3) zur Auffächerung des Lichtstrahls (2) eine Zylinderoptik aufweist.

10. Mikroskop-Aufbau nach einem der Ansprüche 1 bis 9, **dadurch gekennzeichnet, dass** ein Detektor in Form mindestens eines CCD-Chips (9) vorgesehen ist.

11. Mikroskop-Aufbau nach einem der Ansprüche 1 bis 10, **dadurch gekennzeichnet, dass** ein Detektor in Form mindestens eines Fotodiodenarrays vorgesehen ist.
